# EUROPEAN PATENT SPECIFICATION

(11) **EP 3 141 724 B1**
(45) Date of publication and mention of the grant of the patent: **14.11.2018**
(21) Application number: 16186914.4
(22) Date of filing: 01.09.2016
(51) Int. Cl.: F02C 6/08, F04D 27/02, F02C 9/18, F01D 21/00

(54) **DETECTION OF HIGH STAGE VALVE LEAKAGE BY PRESSURE LOCKUP**
ERFASSUNG EINES VENTILLECKS EINES HOCHDRUCKISOLATIONSVENTILS DURCH DRUCKREGELUNG
DÉTECTION DE FUITE DE SOUPAPE D'ÉTAGE SUPÉRIEUR PAR VERROUILLAGE DE PRESSION

(30) Priority: 09.09.2015 US 201562215955 P; 02.06.2016 US 201615171166
(43) Date of publication of application: 15.03.2017
(73) Proprietor: Honeywell International Inc., Morris Plains, NJ 07950 (US)
(72) Inventor: HOFFMAN, Timothy J., Morris Plains, New Jersey 07950 (US)
(74) Representative: Houghton, Mark Phillip

(56) References cited:
- DE-B3-102005 033 611
- JP-A- S6 456 906
- US-A- 5 063 963
- US-A1- 2014 090 458

## Description

### BACKGROUND OF THE INVENTION

The present invention generally relates to engine bleed air systems and, more particularly, to bleed air systems utilizing multiple engine ports and a valve with a shutoff capability for port selection.

In an engine bleed air system, a subsystem of valves is used to regulate pressure off of one or more compressor stages of the engine. In the case of multiple stages, the higher stage valve may be closed when lower stage pressure is sufficient. The ability to detect failures of this valve resulting in unacceptable leakage may be limited to gross failures of the valve. Flow leakages that exceed the allowable values can be detrimental to fuel economy or to the equipment itself as the temperature of the leaking air can cause unacceptable heating of equipment exposed to the air stream. If left undetected, this problem can persist, eventually resulting in either the gross failure of the leaking valve or equipment both upstream and downstream of the leaking valve. If detectable, the failure can be mitigated by limiting the dispatch of the aircraft or isolating the engine bleed air system.

As can be seen, there is a need for improved apparatus and methods for detecting high pressure valve leakage in an engine bleed system.
Japanese Patent Publication No. JP S64-56906 describes a method of starting-up a mixed-pressure turbine while avoiding water ingress.
German Patent Publication No. DE 102005033611 describes testing of control and safety valves in the gas line of a gas burner. US2014/0090458 describes a method and device for determining an air bleed on an aircraft turbojet engine.

### SUMMARY OF THE INVENTION

The present invention is defined by the appended claims.

In one aspect of the present invention, a valve leakage system comprises a first pressure sensor; a shut off valve (SOV) downstream of the first pressure sensor; a second pressure sensor downstream of the SOV; an exhaust area downstream of the second pressure sensor; wherein the exhaust area provides outflow of fluid; wherein the outflow is always continuous; and a comparator unit that compares pressure between the first and second pressure sensors.

In another aspect of the present invention, a valve leakage system comprises a first pressure sensor; a shut off valve (SOV) downstream of the first pressure sensor; a manifold downstream of the SOV; a second pressure sensor in communication with the manifold; a system component downstream of the manifold; a duct between the system component and the manifold; an exhaust area in one of the duct, the manifold, and the system component; wherein the exhaust area provides a leakage of fluid that is only continuous; and a comparator unit that compares pressure between the first and second pressure sensors.

In a further unclaimed aspect of the present invention, an engine bleed air system comprises a valve leakage system having a valve leakage system having: a first pressure sensor; a high pressure shut off valve (HPSOV) downstream of the first pressure sensor; a manifold downstream of the HPSOV; a second pressure sensor in communication with the manifold; an exhaust area that consists of a hole in the manifold; wherein the exhaust area provides outflow of fluid; wherein the exhaust area is always open; and a comparator unit that compares pressure between the first and second pressure sensors.

These and other features, aspects and advantages of the present invention will become better understood with reference to the following drawings, description and claims.

### BRIEF DESCRIPTION OF THE DRAWINGS

FIG. 1 is schematic diagram of the system according to an embodiment of the present invention;
FIG. 2 is a graph of intermediate pressure v. leakage area ratio according to an embodiment of the present invention;
FIG. 3 is a graph of intermediate pressure v. valve leakage area according to an embodiment of the present invention;
FIG. 4 is a graph of valve pressure drop v. valve leakage area according to an embodiment of the present invention.

### DETAILED DESCRIPTION OF THE INVENTION

The following detailed description is of the best currently contemplated modes of carrying out exemplary embodiments of the invention. The description is not to be taken in a limiting sense, but is made merely for the purpose of illustrating the general principles of the invention, since the scope of the invention is best defined by the appended claims.

Various inventive features are described below that can each be used independently of one another or in combination with other features.

Broadly, embodiments of the present invention generally provides for the detection of leakage of a valve, for example a high pressure shut off valve (HPSOV) in an engine bleed air system, by measuring the pressure inside the volume of air between the leaking valve and downstream components when the engine is running and the bleed system should be off and valves in the system are closed. If the pressure in the volume is comparable to the pressure upstream of the leaking valve; this implies that the valve has failed. This condition is referred to as "pressure lockup". If the pressure in the volume is much less than the pressure upstream of the valve, the leakage flow is considered acceptable. This detection scheme can provide that the leakages for all the components have an allowable minimum and maximum leakage.

The overall architecture of the present system is consistent with many aircraft bleed air systems, so that new components necessary to satisfy the design objective of the present invention are minimal. This may include specifying a new component to provide a minimum exhaust flow for the manifold under normal leakage that would be overcome if the high stage valve leakage were greater. Typically, this would not be required as minimum leakage could be maintained by including features such as additional holes in the downstream equipment.

The present invention assumes that the system can be shut down while the aircraft engine is operational during ground idle conditions. With all valves in the system commanded closed, the pressure in the intermediate manifold will reach equilibrium when the flow through the HPSOV into the manifold equals the leakages out of the manifold. As the leakage rates can vary, one can consider a range of leakage conditions both into and out of the manifold with this approach. If the HPSOV leakage flow rate is high (due to a failure), the intermediate pressure can be nearly equal to the available high stage bleed pressure during ground idle. However, if the leakage flow rate is low out of the system, the pressure may also be high for normal HPSOV leakage conditions.

Accordingly, the present invention can provide an automatic leakage test of the intermediate pressure manifold for HPSOV fault monitoring. The invention can further provide partial coverage for failures that result in latent leakages exceeding the end-of-life (EOL) maximum for the HPSOV. This monitoring could be used for ground scenarios while the engine is running, yet the bleed system is commanded off. This mode of operation may not be pilot initiated, but could be part of a pre-flight or post-flight test while the system is shut off and the downstream components are closed.

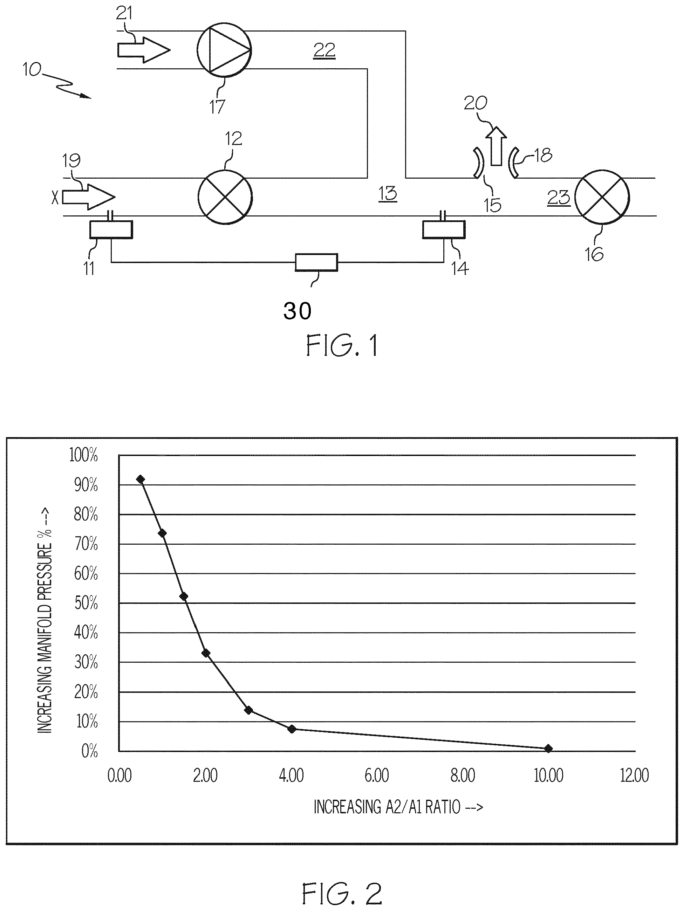

FIG. 1 is a schematic view of a valve leakage system 10 according to embodiment of the present invention. As an example, the system 10 can be part of a larger high pressure system, system such as an engine bleed air system. The system 10 may include a first or high pressure sensor 11 that can sense or monitor the pressure of the air stream 19 leading into the system.

A first valve 12, such as a shut off valve (SOV) including a high pressure shut off valve (HPSOV), can be downstream of the first pressure sensor 11. In an embodiment, the valve 12 may be designed to completely or near completely shut off air stream 19. However, over time, the valve 12 may deteriorate and leak.

A second pressure sensor 14 is downstream of the valve 12 and in pressure communication with the manifold 13. The sensor measurements are available to the comparator 30.

A comparator 30 can receive pressure signals from the first and second sensors 11, 14. The comparator 30 may then compare the pressure signals from the two sensors to obtain a pressure differential. The pressure differential may then be compared to desired pressure differential(s) and undesired pressure differential(s). The desired pressure differential(s) may be indicative of the valve 12 being in a good working or operating condition, and the undesired pressure differential(s) may be indicative of the valve 12 being in less than good working or operating condition, such as an end-of-life (EOL) or failure condition. In an embodiment, the comparator may be a processor and a lookup table.

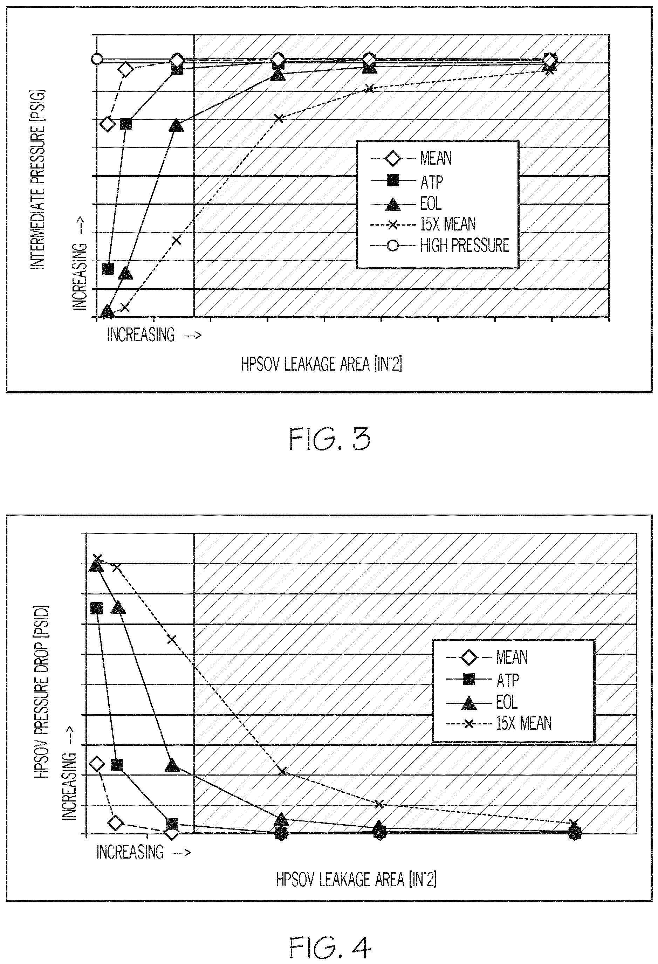

As evident in FIGS. 3 and 4, described in detail later, when the valve 12 is in good working condition with sufficient downstream leakage, it will seal off the airstream enough to decrease the downstream pressure to a fraction of the supply pressure. This will result in a differential between the first and second sensors 11 and 14 that is relatively high. When the valve 12 is in less than a good working condition, the valve is unable to seal off the airstream and the pressure differential between the first and second sensors 11 and 14 will be low.

An exhaust area 15 is downstream of the second pressure sensor 14 and in the manifold 13. The exhaust area 15 provides a continuous outflow 20 of air or fluid from the manifold 13. In other words, the exhaust area 15 is always open to a minimum leakage flow when leakage detection must be performed.

In an embodiment, the exhaust area 15 consists of a hole in the manifold 13. Therefore, the outflow 20 is always continuous. In another unclaimed embodiment, the exhaust area 15 may be a component with features that allow it to be turned off, and the leakage flow 20 will not be present when detection is not being performed. However, in most cases a solenoid or shutoff device is not economical and is a point of failure to the system and leakage detection monitor.

The exhaust area 15 can be configured to provide an outflow 20 in an amount and at a rate that enables a pressure differential, between the first and second sensors 11 and 14, which can distinguish between a desired pressure differential or range and an undesired pressure differential or range. The desired pressure differential or range may, in an embodiment, be indicative of the valve 12 being in proper or good working condition. An undesirable pressure differential or range may be indicative of a valve being in an improper of failed condition with excessive leakage flow, and in need of maintenance or replacement.

In an embodiment, the outflow 20 may flow through a duct 18 which may provide another outflow area similar to the outflow area 20.

In another embodiment, the system 10 may further include duct 23 downstream of the intermediate manifold 13, and a system component 16 in the duct 23. Accordingly, in an embodiment, the system component may be downstream of the second sensor 14 and/or downstream of the outflow area 15. The duct and/or the system component 16 may include another outflow area 20. In various embodiments, the system component 16 may be a feature or component of the downstream air consumer, a receiver of the air flow from the engine bleed air system.

Thus, the present invention envisions that one or more exhaust areas can be disposed in one or more of the manifold 13, the exhaust area 15, the duct 23, and/or the system component 16.

In a further embodiment, the system 10 may include a second valve 17, such as a low pressure bleed air valve, in a second or low pressure manifold 22 that is in communication with the first manifold 13. In an embodiment, the second valve 17 may be designed to completely or near completely shut off a second or low pressure fluid 21 through the valve 17.

In an embodiment, the low pressure fluid 21 may be from a low pressure stage of an engine and is at a pressure lower than the high pressure fluid 19. In embodiments, the second pressure fluid 21 may enter the intermediate manifold 13 downstream of the valve 17 and/or upstream of the second sensor 14.

As can be appreciated, if the valve 12 leakage flow rate is high (due to a failure); the intermediate pressure in the intermediate manifold 13 can be close to the available bleed pressure 19 during ground idle of an aircraft. However, if the leakage flow rate out of one or more leakage areas 15, is low, the intermediate pressure may also be high for normal HPSOV leakage conditions.

### EXAMPLES

Leakages into and exiting the intermediate manifold 13 can be quantified as areas that represent the flow rate at given pressure and temperature conditions.

FIG. 2 is a graph that, in an exemplary embodiment, summarizes the ratio of the outlet leakage area(s) to the inlet leakage area(s) v. intermediate manifold pressure. In FIG. 2, A2 represents the outlet leakage area(s), A1 represents the inlet leakage area(s). The vertical axis represents the intermediate pressure at sensor 14, as a percentage of the available high pressure at sensor 11. In this embodiment, as the ratio of exit area to inlet area increases, the intermediate pressure decreases, and the pressure drop across the valve 12 increases. This is quantified as a ratio of the intermediate pressure to the engine supply pressure.

The operating condition to be used in the fault detection analysis may be a low pressure ground idle condition. The manifold pressure reading 14 converges on the steady-state solution that balances valve 12 leakage with an assumed system leakage flow out of the intermediate manifold. Even at low supply pressures to the valve 12 component, the leakage ratio and differential are observable behaviors.

FIG. 3 is a graph showing intermediate manifold pressure measured at the second sensor 14 versus HPSOV 12 leakage area. In the foregoing, the outlet leakage area 15 remained constant. As the HPSOV leakage flow increases (represented as an effective area increase), the intermediate pressure increases. The shaded area depicts the HPSOV leakage areas that are considered failure conditions at takeoff (greater than EOL leakage). Different leakage areas are provided, representing different lines on the graph.

FIG. 4 is a graph showing HPSOV 12 pressure drop versus HPSOV 12 leakage area. As the HPSOV leakage area increased (while the outflow leakage area 15 remained constant), the pressure drop across the HPSOV decreased. The shaded area depicts the HPSOV leakage areas that are considered failure conditions at takeoff (greater than EOL leakage). Different leakage areas are provided, representing different lines on the graph.

In FIGS. 3 and 4, a 15x mean condition is provided as an example to represent a higher rate of leakage out of the intermediate manifold. The higher ratio of A2/A1 causes the pressure differential reading 30 to be high at low HPSOV leakages but is low as HPSOV leakage reaches a failure condition.

The ratio of controlled outlet leakage are 15 can be designed to ensure that the low differential is only observable when the leakage flow through valve 12 reaches a critical level. This could be set at the EOL leakage threshold of the valve or higher depending upon the robustness and criticality of the failure detection.

It is envisioned to operate as follows: during an engine ground idle condition; while the engine bleed is operational, the system can enter a cyclic test to command the HPSOV to close and subsequently the downstream component 16 to close. In the resulting few seconds, the controller unit can compare the intermediate pressure sensor 14 with the engine pressure available. If the pressure in the manifold 13 increases and the resulting pressure drop across the valve 12 is less than 5 (TBC) psid, the system 10 can declare an HPSOV leakage failure.

Based on a transient calculation, the system should reach a steady-state pressure for an HPSOV failure condition in a few seconds - such as approximately 5 seconds. This could enable a short interruption to normal operation, and allow for sequencing the two bleed air systems while operating on ground.

To improve robustness, the leakage downstream of the HPSOV can meet allowable design tolerances. The minimum leakage should ensure that the intermediate manifold will not be significantly pressurized for HPSOV leakage flow rates that would still pass the HPSOV Acceptance Test. The maximum could be set to reduce the fuel burn penalty in cruise, and reduce high temperature exposure to other equipment. The greater the downstream leakage allowable; the larger the HPSOV leakage would need to be for robust detection.

In the field, the following test could determine the system leakage. With no pressure in the system, remove the pressure sensor 14 and connect a ground pressure canister to the low pressure sensor boss. Pressurize the manifold to a prescribed level that does not cause component damage, or exercise relief valves, and record the maximum total flow. The total flow rate should be within a design range or a volumetric equivalent.

The designed leakage area during normal operation should not be excessive as the leakage area is a penalty to engine efficiency when leakage detection is not active. In the exemplary embodiment, the leakage air flow rate is found to be only a minor penalty during operating conditions such as cruise where the manifold 13 air pressures are low.

It should be understood, of course, that the foregoing relates to exemplary embodiments of the invention and that modifications may be made without departing from the scope of the invention as set forth in the following claims.

## Claims

1. A valve leakage system (10) for an engine bleed air system, comprising:
a first pressure sensor (11);
a shut off valve, SOV, (12) downstream of the first pressure sensor (11);
a second pressure sensor (14) downstream of the SOV (12);
a manifold (13) downstream of the second pressure sensor (14);
an exhaust area (15) in the manifold (13) wherein the exhaust area (15) is a continuously open hole in the manifold and provides outflow of fluid;
wherein the outflow is always continuous; and
a comparator unit (30) that compares pressure between the first (11) and second (14) pressure sensors for detecting a leakage in the SOV.

2. The system of claim 1, wherein the SOV (12) creates a pressure differential between the first pressure sensor (11) and the second pressure sensor (14).

3. The system of claim 2, wherein the pressure differential is indicative of the SOV (12) being in good working condition.

4. The system of claim 2, wherein the pressure differential is indicative of the SOV (12) being in less than good working condition.

## Patentansprüche

1. Ventilleckagesystem (10) für ein Motorzapfluftsystem, umfassend:
einen ersten Drucksensor (11);
ein Absperrventil, SOV, (12) stromabwärts des ersten Drucksensors (11);
einen zweiten Drucksensor (14) stromabwärts des SOV (12) ;
einen Verteiler (13) stromabwärts des zweiten Drucksensors (14);
einen Auslassbereich (15) im Verteiler (13),
wobei der Auslassbereich (15) ein durchgehend offenes Loch im Verteiler ist und ein Ausströmen von Fluid gewährleistet,
wobei das Ausströmen immer kontinuierlich verläuft; und
eine Komparatoreinheit (30), die Druck zwischen dem ersten (11) und dem zweiten (14) Drucksensor zum Erfassen eines Lecks im SOV vergleicht.

2. System nach Anspruch 1, wobei das SOV (12) ein Druckdifferenzial zwischen dem ersten Drucksensor (11) und dem zweiten Drucksensor (14) erzeugt.

3. System nach Anspruch 2, wobei das Druckdifferenzial anzeigt, dass sich das SOV (12) in einem guten Betriebszustand befindet.

4. System nach Anspruch 2, wobei das Druckdifferenzial anzeigt, dass sich das SOV (12) in keinem guten Betriebszustand befindet.

## Revendications

1. Système pour une fuite de soupape (10) pour un système d'air de purge de moteur, comprenant :
un premier capteur de pression (11) ;
une soupape de fermeture, SOV, (12) en aval du premier capteur de pression (11) ;
un deuxième capteur de pression (14) en aval de la SOV (12) ;
un collecteur (13) en aval du deuxième capteur de pression (14) ;
une zone d'échappement (15) dans le collecteur (13), la zone d'échappement (15) étant un trou constamment ouvert dans le collecteur et fournissant un écoulement de fluide en sortie ;
l'écoulement de sortie étant toujours continu ; et
une unité comparatrice (30) qui compare la pression entre le premier capteur de pression (11) et le deuxième capteur de pression (14) pour détecter une fuite dans la SOV.

2. Système selon la revendication 1, dans lequel la SOV (12) crée une différence de pression entre le premier capteur de pression (11) et le deuxième capteur de pression (14).

3. Système selon la revendication 2, dans lequel la différence de pression indique que la SOV (12) est en bon état de fonctionnement.

4. Système selon la revendication 2, dans lequel la différence de pression indique que la SOV (12) est dans un état inférieur à un bon état de fonctionnement.
